# EUROPEAN PATENT SPECIFICATION

(11) **EP 3 641 082 B1**
(45) Date of publication and mention of the grant of the patent: **27.04.2022**
(21) Application number: 17914001.7
(22) Date of filing: 16.06.2017
(51) Int. Cl.: H02B 13/035, H02B 13/02

(54) **GAS INSULATED SWITCHGEAR**
GASISOLIERTE SCHALTANLAGE
APPAREILLAGE DE COMMUTATION À ISOLATION GAZEUSE

(43) Date of publication of application: 22.04.2020
(73) Proprietor: Mitsubishi Electric Corporation, Chiyoda-ku Tokyo 100-8310 (JP)
(72) Inventor: MORI, Takahiro, Tokyo 100-8310 (JP); MATSUNAGA, Toshihiro, Tokyo 100-8310 (JP)
(74) Representative: Witte, Weller & Partner Patentanwälte mbB
(86) International application number: PCT/JP2017/022268
(87) International publication number: WO 2018/229962

(56) References cited:
- EP-A1- 0 915 545
- JP-A- H08 308 044
- JP-A- 2000 059 930
- JP-A- 2001 169 420
- JP-A- 2006 238 522
- JP-A- 2008 104 338
- JP-U- S6 425 809
- JP-U- S62 122 410
- Siemens: "Katalog HA 35.41 ? 2016", , 1 December 2016 (2016-12-01), XP055374247, Retrieved from the Internet: URL:http://w3.siemens.com/powerdistributio n/global/SiteCollectionDocuments/en/mv/swi tchgear/gas-insulated/nxplus-c/katalog-nxp lus-c_de.pdf [retrieved on 2017-05-18]
- Abb: "ZX2 Gasisolierte Mittelspannungs-Schaltanlagen", , 20 August 2008 (2008-08-20), pages 1-16, XP055075523, Retrieved from the Internet: URL:http://www05.abb.com/global/scot/scot2 35.nsf/veritydisplay/6e17fff17d0ac740c1257 2ff004fce26/$file/l2356 d zx2 08.2008.pdf [retrieved on 2013-08-16]

## Description

### Technical Field

The present application relates to a gas insulated switching device used for protecting power distribution equipment, and more particularly to the structure and configuration of equipment constituting the gas insulated switching device.

### Background Art

The gas insulated switching device is a power switching device wherein switching devices such as disconnecting switch, grounding switch, circuit breaker, and measuring instruments such as current transformer and voltage transformer are placed in a grounded metal housing, by sealing the insulating gas at a predetermined pressure in the pressure vessel in the housing, the parts between live part and grounding part, and the interphase of live parts are insulated.

Examples of the structure of a conventional gas insulated switching device include FIG. 2 and FIG. 4 described in Patent Literature 1. In FIGS 2 and 4 described in Patent Literature 1, as shown in FIGS. 11 and 12 of the present application, it is a structure wherein a disconnecting switch 2 with a grounding switch and a circuit breaker 3 are arranged inside the pressure vessel 1 from the bus bar 4 at the top of the housing, and connected to the power cable 9 from the lower part of the housing. The current transformer 5 and the voltage transformer 6 used for measuring the current and voltage of the main circuit are appropriately arranged at either in the inside or the outside of the pressure vessel 1.

Patent Literature 2, according to its abstract, relates to switch gear comprising at least one group of n power switches, which extend substantially in a longitudinal direction perpendicular to the front of the switch gear, at least one busbar compartment containing n busbars for each group of n power switches, which busbars are positioned parallel to said front, wherein each busbar compartment is enclosed by at least four walls, two of which are perpendicular to the front, at least one group of n busbar disconnecters, for making and breaking contact between busbars and respective output terminals of the power switches, wherein the output terminals of the power switches are constructed as coupling elements, to each of which a linkage is connected and a further linkage can be connected in an opposing direction perpendicular to the longitudinal direction, wherein the n busbars extend along one of the walls perpendicular to the front.

Non-Patent Literature 1 relates to gas insulated fixed-mounted circuit breaker switchgear, in particular medium-voltage switchgear.

Non-Patent Literature 2 relates to gas-insulated medium-voltage switchgear

[Patent Literature 1] JP 2004-153953 A

[Patent Literature 2] EP 0 915 545 A1

[Non-Patent Literature 1] Siemens: "Katalog HA 35.41 - 2016"; December 1, 2016; XP055374247

[Non-Patent Literature 2] ABB: "ZX2 Gasisolierte Mittelspannungs-Schaltanlagen"; August 20, 2008; pages 1-16; XP055075523

### Summary of Invention

### Problems to be solved by Invention

As shown in FIGS. 2 and 4 (FIGS. 11 and 12 of the present application) described in Patent Literature 1, in a conventional gas insulated switching device, the power cable 9 can be connected from either the front surface or the back surface of the housing, further, when connecting from the back, it can be connected from both the upper and lower sides of the housing.

However, the external form of the pressure vessel changes depending on the connection direction of the power cable, and when the structure in which the power cable 9 is connected from the back of the housing is adopted, the current transformer 5 needs to be housed in the cable chamber, there is a limit to the range for storing the transformer.

In addition, in Patent Literature 1, although it is a structure in which the voltage transformer 6 can be placed either above or below the housing, when placing the voltage transformer 6 on the top of the housing, the overall height of the housing increases because it needs to be placed on top of the bus bar 4 connected to the pressure vessel 1, there is a problem that the electric chamber in which the gas insulated switching device can be installed is limited.

The present application has been made in view of the above-described circumstances, to realize a gas insulated switching device having a small and flexible device arrangement that does not depend on the specifications of measuring instruments such as a current transformer or a voltage transformer, and the cable connection direction.

### Means for solving the Problems

In the gas insulated switching device according to the present application, a bus bar, a disconnecting switch, a circuit breaker, and a current transformer are disposed inside a housing, a pressure vessel in which an insulating gas is sealed is incorporated in the housing, the disconnecting switch and the circuit breaker are built in the pressure vessel, in the gas insulated switching device in which the bus bar and a power cable are connected via the disconnecting switch, the circuit breaker, and the primary conductor of the current transformer,
the pressure vessel is disposed between an operation mechanism of the circuit breaker and the power cable,
step part is provided at the corner on the power cable side of the pressure vessel,
an outside step cavity is formed outside the step part and inside the housing,
the current transformer is disposed in the outside step cavity and on the back of the pressure vessel,
the primary conductor of the current transformer and the power cable are connected via a bushing for connecting the power cable that penetrates the wall part of the housing interposed between the outside step cavity and the power cable, it is possible to realize a gas insulated switching device having a small and flexible device arrangement that does not depend on the specifications of measuring instruments such as a current transformer or a voltage transformer and the cable connection direction.

### Advantageous Effects of Invention

According to the gas insulated switching device of the present application, a bus bar, a disconnecting switch, a circuit breaker, and a current transformer are disposed inside a housing, a pressure vessel in which an insulating gas is sealed is incorporated in the housing, the disconnecting switch and the circuit breaker are built in the pressure vessel, in the gas insulated switching device in which the bus bar and the power cable are connected via the disconnecting switch, the circuit breaker, and the primary conductor of the current transformer, the pressure vessel is disposed between an operation mechanism of the circuit breaker and the power cable, step part is provided at the corner on the power cable side of the pressure vessel, an outside step cavity is formed outside the step part and inside the housing, the current transformer is disposed in the outside step cavity via a power cable connecting bushing that penetrates the wall part of the housing interposed between the outside step cavity and the power cable, the primary conductor of the current transformer and the power cable are connected, accordingly the gas insulated switching device having a small and flexible device arrangement that does not depend on the specifications of the measuring instruments such as the current transformer and the voltage transformer and the cable connection direction can be performed.

### Brief Description of Drawings

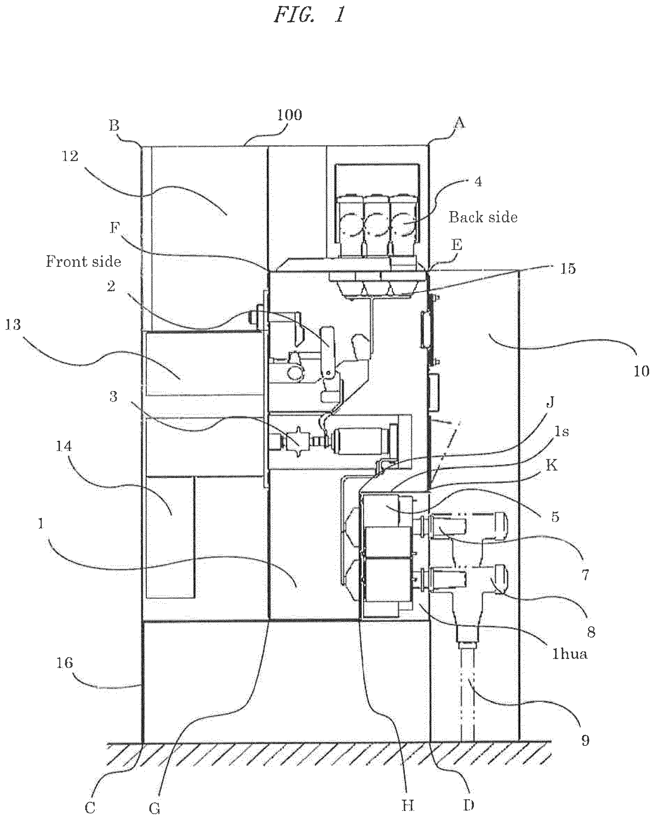

[FIG. 1] FIG. 1 is a side view showing a first embodiment of the present application and is a longitudinal sectional view showing an example of a gas insulated switching device.

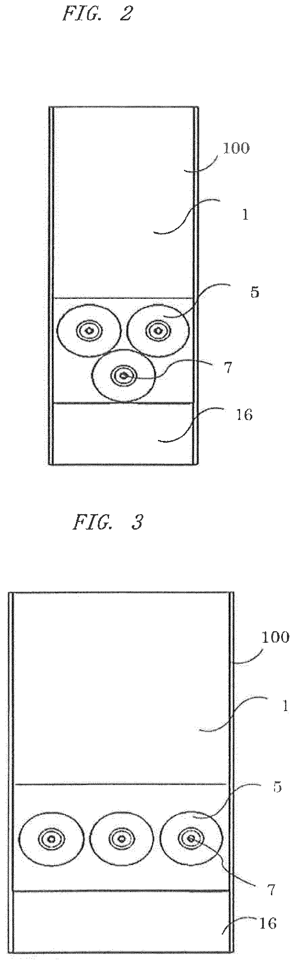

[FIG. 2] FIG. 2 is a view showing a first embodiment of the present application and is a rear view showing an example of the arrangement of the current transformer in FIG. 1.
[FIG. 3] FIG. 3 is a view showing a second embodiment of the present application and a rear view showing another example of the arrangement of the current transformer.

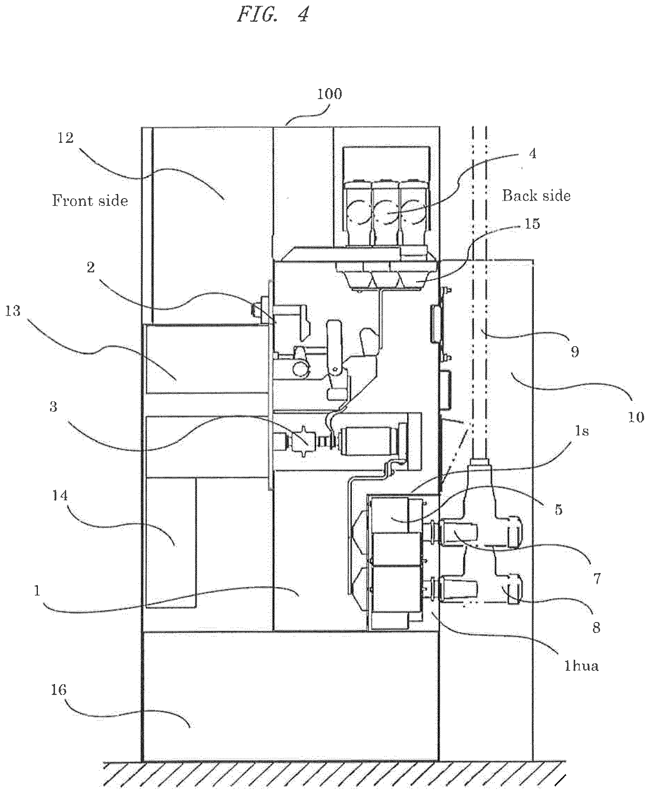

[FIG. 4] FIG. 4 is a side view showing a third embodiment of the present application and is a longitudinal sectional view showing another example of a gas insulated switching device.

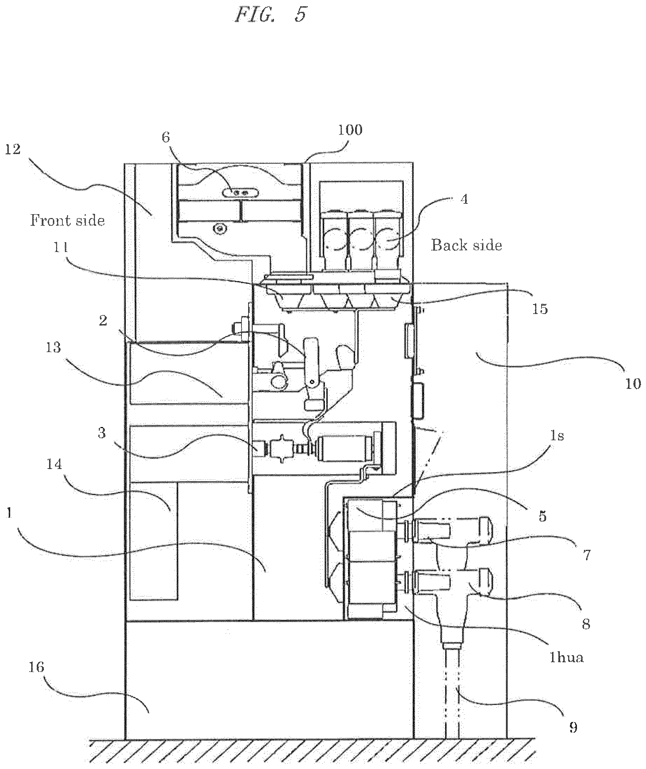

[FIG. 5] FIG. 5 is a side view showing a fourth embodiment of the present application and is a longitudinal sectional view showing still another example of a gas insulated switching device.

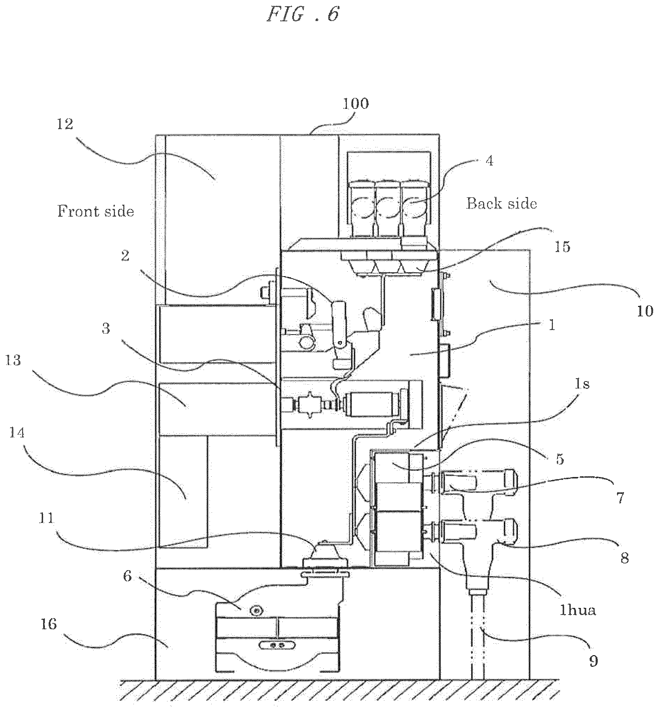

[FIG. 6] FIG. 6 is a side view showing a fifth embodiment of the present application and is a longitudinal sectional view showing still another example of a gas insulated switching device.

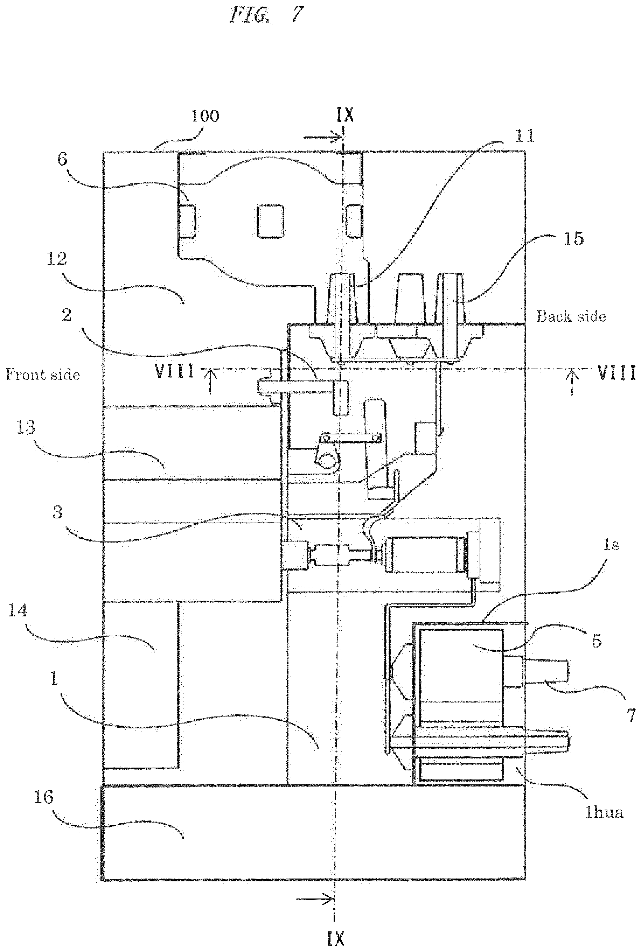

[FIG. 7] FIG. 7 is a side view showing a sixth embodiment of the present application and is a longitudinal sectional view showing still another example of a gas insulated switching device.

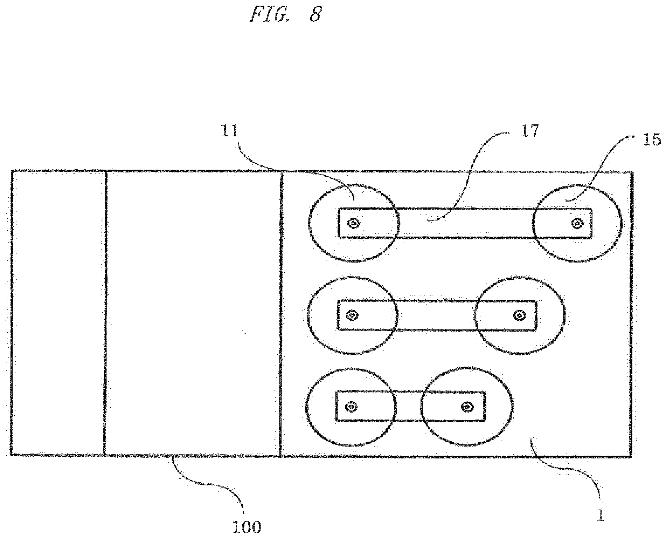

[FIG. 8] FIG. 8 is a diagram showing the sixth embodiment of the present application, and is a bottom view seen in the direction of the arrow from the line VIII-VIII in FIG. 7.

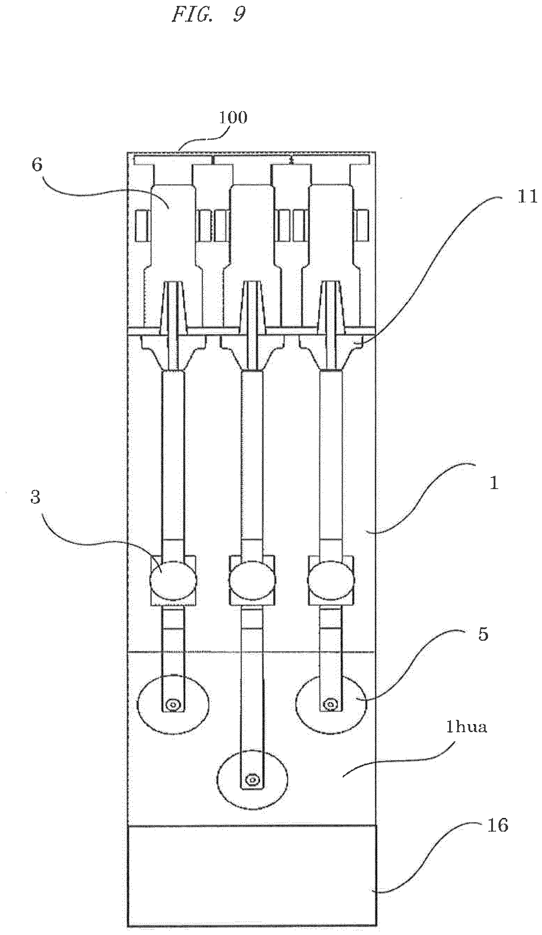

[FIG. 9] FIG. 9 is a diagram showing the sixth embodiment of the present application, and is a front view seen in the direction of the arrow from the line IX-IX in FIG. 7.

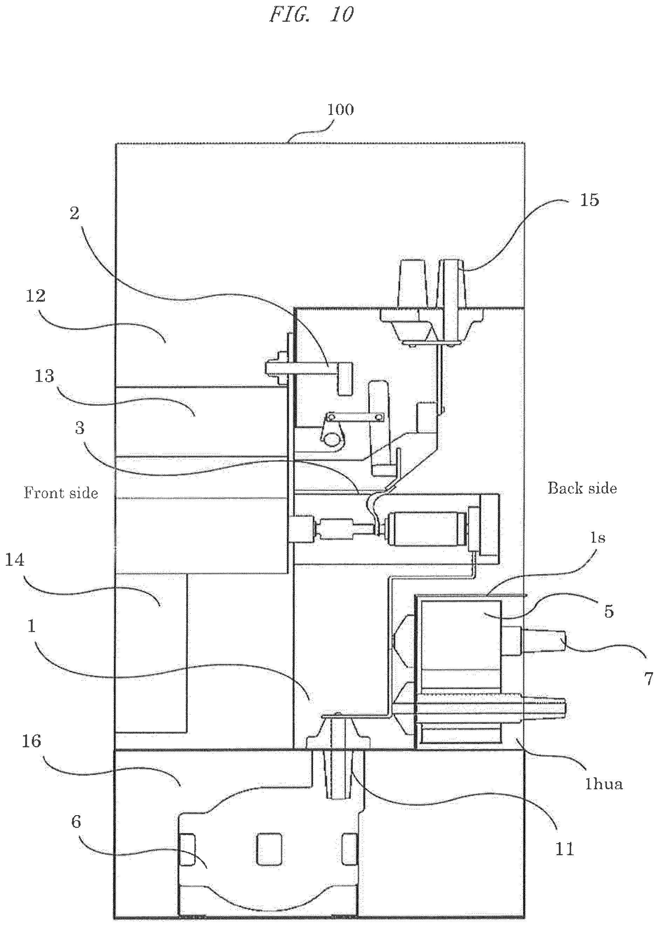

[FIG. 10] FIG. 10 is a side view showing a seventh embodiment of the present application and is a longitudinal sectional view showing still another example of a gas insulated switching device.

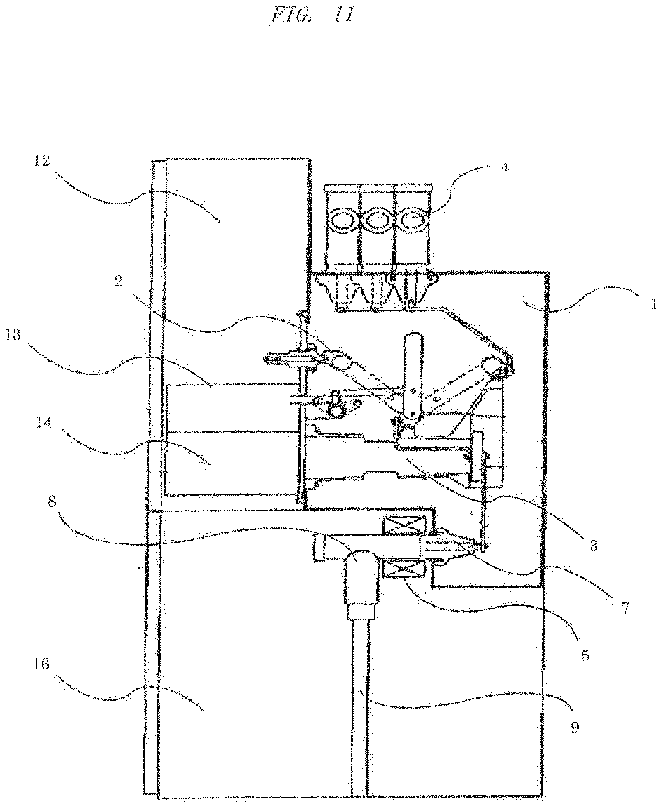

[FIG. 11] FIG. 11 is a longitudinal side view showing a conventional gas insulated switching device shown in FIG. 2 in Patent Literature 1.

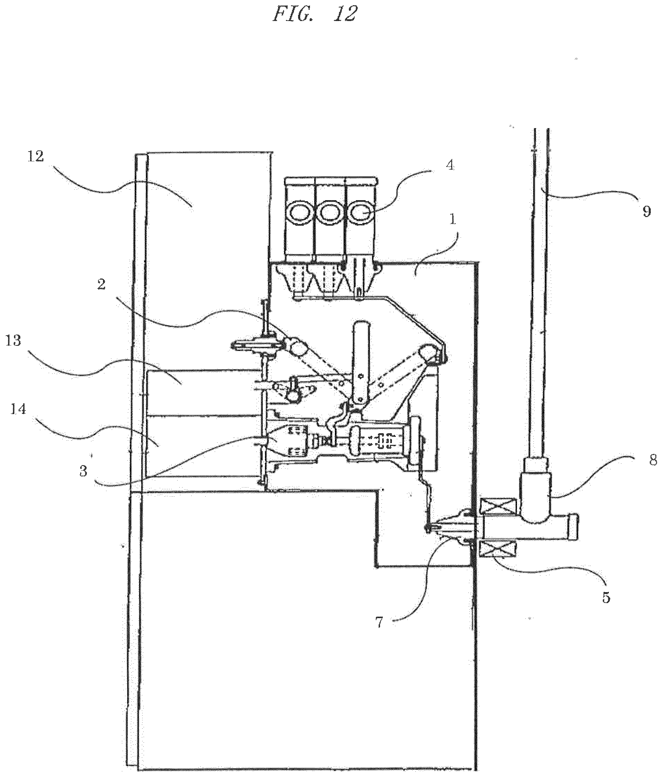

[FIG. 12] FIG. 11 is a longitudinal side view showing a conventional gas insulated switching device shown in FIG. 4 in Patent Literature 1.

### Description of Embodiments

### First Embodiment

Hereinafter, the first embodiment of the present application will be described with reference to FIG. 1 and FIG. 2. FIG. 1 is a longitudinal sectional side view showing an example of a gas insulated switching device, in this example, for example, the left side corresponds to the front surface of the housing and the right side corresponds to the rear surface of the housing. FIG. 2 is a rear view showing an example of the arrangement of the current transformer in FIG. 1.

As illustrated in FIGS. 1 and 2, the gas insulated switching device provides a pressure vessel 1, a step part 1s, an outside step cavity (air space in the housing) 1hua, a disconnecting switch (disconnecting switch with grounding switch) 2, a circuit breaker 3, a bus bar 4, a current transformer (CT) 5, a voltage transformer (VT) 6, a power cable connecting bushing 7, a cable head 8, a power cable 9, a cable chamber 10, a voltage transformer connecting bushing 11, a control chamber 12, an operation mechanism 13 of the disconnecting switch 2, an operation mechanism 14 of the circuit breaker 3, a bus bar connecting bushing 15, a frame 16, a connection conductor (for connection between the bus bar connecting bushing 15 and the voltage transformer connecting bushing 11) 17, an housing 100, and corner points A, B, C, D, E, F, G, H, J, K.

A housing 100 is a metal box having the corner points A, B, C, D, the pressure vessel 1, the step part 1s, the outside step cavity (air space in the housing) 1hua, the disconnecting switch (disconnecting switch with grounding switch) 2, the circuit breaker 3, the bus bar 4, the current transformer (CT) 5, the voltage transformer (VT) 6, the power cable connecting bushing 7, the voltage transformer connecting bushing 11, the control chamber 12, the operation mechanism 13 of the disconnecting switch 2, the operation mechanism 14 of the circuit breaker 3, the bus bar connecting bushing 15, the frame 16, and the connection conductor (for connection between bus bar connecting bushing 15 and voltage transformer connecting bushing 11) 17 are incorporated in the space area surrounded by the corner points A, B, C, D.

The pressure vessel 1 is an area surrounded by corner points E, F, G, H, J, and K.

In FIGS. 4, 5, 6, 7, and 10, which will be described later, since the outlines of the housing 100 and the pressure vessel 1 are the same, the notation of the reference numerals A, B, C, D, E, F, G, H, J, and K are omitted.

According to the first embodiment, in the gas insulated switching device in which the bus bar 4, the disconnecting switch 2, the circuit breaker 3, and the current transformer 5 are disposed inside the housing 100, the pressure vessel 1 in which an insulating gas is sealed is incorporated in a housing 100, the disconnecting switch 2 and the circuit breaker 3 are incorporated in the pressure vessel 1, and the bus bar 4 and the power cable 9 are connected via the primary conductors of the disconnecting switch 2, the circuit breaker 3, and the current transformer 5, and in the gas insulated switching device in which the pressure vessel 1 is disposed between the operation mechanism 14 of the circuit breaker 3 and the power cable 9, the step part 1s is provided at the corner of the pressure vessel 1 on the power cable 9 side, the outside step cavity 1hua is formed outside the step part 1s and inside the housing 100, the current transformer 5 for each of the three phases is arranged in the outside step cavity 1hua, the primary conductor of the current transformer 5 and the power cable 9 are connected via the power cable connecting bushing 7 penetrating through a wall part (a wall part between the corner point A and the corner point D) of the housing 100 interposed between the outside step cavity 1hua and the power cable 9.

In addition, the operation mechanism 14 of the circuit breaker 3 is disposed on the front side of the housing 100 from the pressure vessel 1, and the power cable 9 is disposed on the back side of the housing 100 from the pressure vessel 1, in this structure, the cable head 8 of the power cable 9 and the power cable connecting bushing 7 are attached to and detached from the housing 100 in the front-rear direction. In addition, the cable head 8 of the power cable 9 and the power cable connecting bushing 7 may be attached to and detached from the housing 100 in the vertical direction.

Further, the arrangement of the three-phase current transformer 5 viewed from the back side of the housing 100 is a staggered arrangement.

In addition, the power cable 9 extends in the vertical direction of the housing 100 in the cable chamber 10 provided on the back side of the housing 100 and extending in the vertical direction of the housing 100. The power cable 9 extends downward from the current transformer 5.

In addition, the bus bar 4 is located in the upper side of the pressure vessel 1 and disposed in the housing 100.

In addition, voltage transformer 6 is located in the upper side of the pressure vessel 1 and disposed in the housing 100.

In addition, the voltage transformer 6 is disposed in the housing 100 so as to be located on the upper side of the pressure vessel 1 and in front of the bus bar 4.

The gas insulated switching device has a structure in which the disconnecting switch (disconnecting switch with a grounding switch) 2 and the circuit breaker 3 are mounted in the pressure vessel 1 provided with the step part 1s at the lower back, each disconnecting switch (disconnecting switch with grounding switch) 2 and the circuit breaker 3 are connected in the vertical direction, from the bus bar 4 located at the top of the pressure vessel 1.

The power cable connecting bushing 7, which is an extension bushing for power cable connection extending in the axial direction toward the rear side of the housing, is connected to the outside step cavity (air space in the housing) 1hua outside the pressure vessel 1, the current transformer 5 is accommodated within the outside step cavity (air space in the housing) 1hua outside the pressure vessel 1 so that the power cable connecting bushing 7 penetrates itself(the current transformer 5), the power cable 9 drawn from the lower part of the housing is connected to the power cable connecting bushing 7 via the cable head 8.

According to the structure shown in FIG. 1, the current transformer 5 is accommodated within the outside step cavity (air space in the housing) 1hua provided in the lower part of the pressure vessel 1, by extending through the current transformer 5 the power cable connecting bushing 7 which is an extended bushing for connecting the power cable extending in the back direction, the storage range of the current transformer 5 can be expanded, preventing the cable head 8 from interfering with the back surface of the pressure vessel 1, it is possible to expand the specification range of the applicable current transformer after making common the width dimensions in the left-right direction of the pressure vessel 1 and the cable chamber 10.

The current transformer 5 is housed in the outside step cavity 1hua at the lower back side outside the pressure vessel 1 so that the power cable connecting bushing 7 extending in the rear direction of the housing penetrates, as shown in FIG. 2, the current transformer 5 and the power cable connecting bushing 7 are staggered as viewed from the back side, it is placed in the outside step cavity 1hua on the back side of the pressure vessel.

### Second Embodiment

Hereinafter, the second embodiment of the present application will be described based on FIG. 3 which is a rear-view showing another example of the arrangement of the current transformer.

In the present embodiment, as shown in FIG. 3, the current transformer 5 and the power cable connecting bushing 7 which is an extended bushing for connecting the power cable are housed in the outside step cavity 1hua disposed on the back of the pressure vessel 1 and are arranged in a row in the horizontal direction (specifically, the left-right direction) when viewed from the back side. Hereinafter, the arrangement in the horizontal direction (specifically, the left-right direction) is referred to as "horizontal arrangement in a row".

Without changing the dimensions of the pressure vessel 1 and the cable chamber 10, in addition to the effect of expanding the specification range of applicable current transformer, the arrangement of the current transformer 5 and the power cable connecting bushing 7 is within a predetermined housing width dimension, for example, the specification of the applicable current transformer can be expanded by selectively applying either the staggered arrangement in FIG. 2 or the horizontal arrangement in FIG. 3.

### Third Embodiment

Hereinafter, the third embodiment of the present application will be described based on FIG. 4 which is a longitudinal sectional side view showing another example of the gas insulated switching device.

As illustrated in FIG. 4, in the third embodiment, as in the first and second embodiments, in the back lower outside step cavity 1hua outside the pressure vessel 1, the current transformer 5 is stored so that the power cable connecting bushing 7 which is an extended bushing for connecting the power cable extending in the rear direction of the housing penetrates the current transformer 5, the power cable 9 is connected to the power cable connecting bushing 7 via the cable head 8, and is connected to a switching device such as the circuit breaker 3 in the pressure vessel 1. By storing the current transformer 5 and the power cable connecting bushing 7 in the outside step cavity 1hua, since the cable head 8 protrudes from the back surface of the pressure vessel 1, there is no interference in the upper direction of the cable head 8, as shown in FIG. 3, the power cable 9 is connected from the upper side of the back surface of the pressure vessel 1. In other words, the power cable 9 extends upward from the current transformer 5.

In the present embodiment, as in the first embodiment, without changing the dimensions of the pressure vessel 1 and the cable chamber 10, in addition to the effect of expanding the specification range of applicable current transformers, it is possible to connect the power cable 9 from the upper part of the rear surface of the housing. Further, it can be performed simultaneously with the second embodiment, by arranging the current transformers 5 in a staggered arrangement, the transformer specifications that can be arranged can be expanded. In other words, in combination with the first embodiment, the housing structure does not depend on the current transformer specifications, the housing structure in which the power cable 9 can be connected from either the upper or lower direction on the rear surface of the housing can be realized.

### Fourth Embodiment

Hereinafter, the fourth embodiment of the present application will be described based on FIG. 5 which is a longitudinal sectional side view showing still another example of the gas insulated switching device.

As illustrated in FIG. 5, in the fourth embodiment, as in the first, second, and third embodiments, in the gas insulated switching device in which the current transformer 5 is accommodated within the outside step cavity 1hua on the back of the pressure vessel 1, the power cable connecting bushing being the extended bushing for power cable connection penetrates the current transformer 5, a bushing mounting hole for connecting the voltage transformer is provided in the upper front part of the pressure vessel 1, branched from the main circuit connection conductor inside the pressure vessel 1, the voltage transformer 6 is connected to the upper front side of the housing via the voltage transformer connecting bushing 11 connected to the bus 4 and the main circuit. Further, the voltage transformer 6 is disposed in the housing 100 so as to be located on the upper side of the pressure vessel 1 and in front of the bus bar 4.

The fourth embodiment is similar to the first, second, and third embodiments wherein the housing structure corresponds to the current transformer arrangement without changing the dimensions of the pressure vessel 1 and the cable chamber 10, by placing the voltage transformer connecting bushing 11 on the front side of the housing of the upper part of the pressure vessel 1, the voltage transformer 6 is not the upper part of the bus bar 4, but arranged on the front side of the housing from the bus bar 4 connection position, and becomes a structure that prevents an increase in the overall height of the housing, the increase in dimensions due to the change in the specifications of the voltage transformer 6 can be dealt with by changing the dimensions of the control chamber 12, in the case of row of gas insulated switching devices, in combination with the first, second and third embodiments, the pressure vessel 1 can be shared, and the power cable connection direction can be easily changed, both the overall height and depth of the housing can be unified.

### Fifth embodiment

Hereinafter, the fifth embodiment of the present application will be described based on FIG. 6 which is a longitudinal sectional side view showing still another example of the gas insulated switching device.

As illustrated in FIG. 6 in the fifth embodiment, the housing structure is characterized by the current transformer housing structure and the power cable connecting bushing 7 as in the first, second, and third embodiments, the voltage transformer 6 arranged in a base 16 under the pressure vessel 1 via the voltage transformer connecting bushing 11 attached to a connection hole provided in the lower front of the pressure vessel 1, connected to the power cable connecting bushing 7 on the power cable 9 side by a conductor branched from the main circuit conductor inside the pressure vessel 1, the voltage transformer 6 is disposed at the lower part of the pressure vessel 1.

The fifth embodiment is similar to the first, second, and third embodiments in the housing structure having the pressure vessel 1 and the cable chamber 10 that do not depend on the specifications of the current transformer, the voltage transformer 6 is arranged at the lower part of the pressure vessel 1 by providing a connection terminal on the pressure vessel 1. Similarly to the first and third embodiments, the power cable 9 also can be connected from both the upper and lower directions on the rear surface of the housing.

### Sixth embodiment

Hereinafter, the sixth embodiment of the present application will be described with reference to FIGS 7 to 9. FIG. 7 is a longitudinal sectional side view showing still another example of the gas insulated switching device, FIG. 8 is a bottom view seen from the line VIII-VIII in FIG. 7, and FIG. 9 is a front view as seen in the direction of the arrow from the line IX-IX in FIG. 7.

The sixth embodiment relates to the connection of the voltage transformer (VT) 6 particularly to the bus bar 4 as illustrated in FIGS 7 to 9. In FIG. 7, the bus bar connecting bushing 15 and a voltage transformer connecting bushing 11 for connecting a voltage transformer (VT) are disposed through the ceiling part of the pressure vessel 1 upward. A planar arrangement of the bus bar connecting bushing 15 and the voltage transformer connecting bushing 11 is shown in FIG. 8. FIG. 8 is a bottom view looking upward toward the paper surface from the position of the line VIII-VIII in FIG. 7.

As illustrated in FIG. 8, three bus bar connecting bushings 15 connected to each phase of the bus bar 4 are arranged diagonally on the right side (back side) toward the paper surface, three voltage transformer connecting bushing 11 connected to the voltage transformer (VT) 6 on the left side (front side) toward the paper surface in the vertical direction toward the paper surface (left and right as viewed from the front side in FIG. 7) are juxtaposed. One voltage transformer (VT) 6 is provided for each phase, and one voltage transformer (VT) 6 is attached to each connection part protruding upward from the voltage transformer connecting bushing 11.

The connecting part of the voltage transformer (VT) 6 is formed in a cylindrical shape (concave part) with a solid insulator such as an epoxy resin, the connection conductor is arranged at the innermost part, and a connection part (convex part) protruding upward from the voltage transformer connecting bushing 11 and the tubular shape (concave part) are connected in a shape that fits unevenly. In addition, in the pressure vessel 1, 17 is a connecting conductor that electrically connects the voltage transformer connecting bushing 11 and the bus bar connecting bushing 15 to each other.

By adopting such a configuration, it becomes possible to effectively use the space in front of the bus bar 4, since it is not necessary to secure a separate space for installing the voltage transformer (VT) 6, the gas insulated switching device can be reduced in size. In addition, the voltage transformer connecting bushing 11 is arranged in front of the bus bar connecting bushing 15 installed for connecting the bus bar 4 in the same manner as the bus bar connecting bushing 15, the connection is easy by connecting the cylindrical connection part (concave part) of the voltage transformer (VT) 6 from above the connection part (convex part) of the voltage transformer connecting bushing 11 so that the concavity and convexity are fitted, further, since the space necessary for surrounding insulation can be reduced, the gas insulated switching device can be reduced in size.

### Seventh embodiment

Hereinafter, the seventh embodiment of this application will be described based on FIG. 10 which is a longitudinal sectional side view showing still another example of the gas insulated switching device.

As illustrated in FIG. 10, the seventh embodiment shows a configuration particularly when a voltage transformer (VT) 6 is connected to the main circuit on the power cable 9 side. The connection structure between the voltage transformer connecting bushing 11 for voltage transformer (VT) connection and the voltage transformer (VT) is the same as that in the sixth embodiment. Further, by arranging the voltage transformer (VT) in the space in front of the connecting part of the power cable 9 and in the lower part of the gas insulated switching device, since it is not necessary to secure separate space for installing the voltage transformer (VT) 6, the gas insulated switching device can be reduced in size.

### Eighth embodiment

In the first to seventh embodiments, the cable head 8 attached to the tip of the power cable 9 is L-shaped, the power cable connecting bushing 7 and the cable head 8 are shown to be attached and detached or connected along the longitudinal axis of the gas insulated switching device, the front end of the connecting part of the power cable connecting bushing 7 (the connection position with the cable head 8 in FIGS. 1, 4, 5, and 6) is not directed in the front-rear direction of the gas insulated switching device as shown in the FIGS, it can be formed so that the front-end of the tip part of the connection part of the power cable connecting bushing 7 may face the up-down direction of the gas insulated switching device (it faces in the direction orthogonal to the axis line of the power cable connecting bushing 7). In this case, the cable head attached to the tip of the power cable drawn from the upper side or the lower side of the gas insulated switching device is not L-shaped as shown in FIGS.1, 4, 5 and 6, but is able to be liner shape to the up and down direction of the gas insulated switching device, it connects with the front-end of the tip part of the connection part of the power cable connecting bushing 7. As a result, the cable head 8 has a linear shape, the structure is simplified, and confirmation of the connection state of the connection part can be facilitated.

As is apparent from the above description and each of the aforementioned drawings, the above embodiments have the following technical characteristics.

Characteristic point 1: By housing the current transformer in the notch provided in the lower back of the pressure vessel and arranging the power cable extended connecting bushing in the rear of the housing, it becomes possible to expand the applicable defined pressure vessel and the current transformer specifications within cable chamber dimensions, by using an extended power cable connecting bushing, the cable head protrudes from the back of the housing, it is possible to propose an housing structure that allows cable connection from the top and bottom of the housing as before. Along with the arrangement of the current transformer housing structure and the extended power cable connecting bushing, by arranging the current transformer to be housed in the notch in a staggered arrangement, it is possible to propose a structure that expands the specifications of the current transformer that can be housed within the housing width. Further, in the switching device characterized by the arrangement of the current transformer housing structure and the extended power cable connecting bushing, the voltage transformer can be placed either on the top or bottom of the pressure vessel, when placing on the top, the dedicated terminal provided on the top of the pressure vessel is used, by connecting to the front part of the bus bar, it avoids the placement at the top of the bus bar, the housing height is reduced compared to the conventional structure, the electric chamber environment that can be installed can be expanded, since the connection between the bus bar and the voltage transformer is branched, there is no need to remove the voltage transformer at the time of rowing, an opening / closing device that facilitates row work is provided.

Characteristic point 2: The bus bar is placed at the top or bottom of the pressure vessel that houses a device such as a disconnecting switch, a grounding switch, and a circuit breaker together with an insulating gas inside the pressure vessel provided inside the housing, in the gas insulated switching device that connects the cable (power cable 9) drawn from above or below to the power cable connecting bushing 7 led out from the pressure vessel to the rear, a recess recessed toward the inside of the pressure vessel is provided at the rear upper end or lower end of the pressure vessel, while arranging a current transformer (CT) 5 in the recess, the lead-out part of the power cable connecting bushing 7 is led out through the axial center of the current transformer (CT) 5 toward the rear of the pressure vessel.

Characteristic point 3: In the characteristic point 2, the space in which the power cable 9 can be drawn from either the upper side or the lower side is formed in the rear part of the pressure vessel, and the cable head 8 having a connection part directed to the front of the gas insulated switching device is provided at the tip of the cable (power cable 9) drawn from above or below, the gas insulated switching device connects the power cable connecting bushing 7 and the cable (power cable 9) along an axis directed forward and rearward of the gas insulated switching device.

Characteristic point 4: In the characteristic point 2, the space is formed in the rear part of the pressure vessel so that the cable (power cable 9) can be pulled in from above or below, the cable head 8 having a connection part directed upward or downward of the gas insulated switching device is provided at the tip of the cable (power cable 9) drawn from above or below, the connecting part directed upward or downward of the gas insulated switching device is provided at the rear end of the power cable connecting bushing 7, the gas insulated switching device connects the power cable connecting bushing 7 and the cable head 8 of the cable (power cable 9) along the axis line directed upward and downward of the gas insulated switching device.

Characteristic point 5: In the gas insulated switching device in which the bus bar arranged at the top of the pressure vessel is connected to the terminal provided at the top of the pressure vessel by the bus connecting bushing, and devices such as disconnect switch, ground switch, circuit breaker are connected by a conductor inside the pressure vessel, the power cable connecting bushing that extends in the direction of the back of the housing for connecting the power cable is installed in the notch provided in the lower back of the pressure vessel, the cylindrical current transformer is housed in the notch so as to penetrate the bushing for connecting the power cable, the gas insulated switching device is a combination of a pressure vessel, a power cable connecting bushing and a current transformer, capable of adapting to a change in the specifications of the current transformer without changing the shape of the pressure vessel.

Characteristic point 6: In any one of the characteristic points 1 to 4, when the current transformer is housed in the notch on the back surface of the pressure vessel, by arranging the current transformers in a staggered arrangement, the structure of the current transformer that can be applied with the same width of the housing as the housing where the transformers are arranged in a row in the horizontal direction can be expanded.

Characteristic point 7: In any one of characteristic points 1 to 4, by providing a voltage transformer connecting bushing that is different from the power cable connecting bushing and bus bar connecting bushing in the pressure vessel, branching from the main circuit, the housing structure is capable of connecting a voltage transformer that can be mounted on or under a pressure vessel.

Characteristic point 8: In any one of the characteristic points 1 to 4, by connecting the power cable to the notch provided in the pressure vessel, because the tip of the power cable connecting bushing on the back side of the housing protrudes from the back of the pressure vessel to the back side of the housing, by using the T-shaped cable connector, there is no interference between the upper and lower sides of the power cable, the power cable can be connected from either the top or bottom direction.

Characteristic point 9: By adopting a structure that combines a pressure vessel characterized by a notch in the lower part of the back, a bushing for connecting the power cable extending in the direction of the back of the housing, and a cable chamber, the scope of application of current transformer specifications can be expanded without changing the pressure vessel structure, in addition to reducing the depth and height of the housing, the power cable can be connected from both the upper and lower directions on the back in any form.

In the drawings, the same reference numerals indicate the same or corresponding parts.

In the present application, each embodiment can be appropriately modified, omitted, and combined within the scope of the invention as defined by the appended claims.

### Reference Signs List

1 Pressure vessel,
1s Step part,
1hua Outside step cavity (air space in the housing),
2 Disconnecting switch (disconnecting switch with grounding switch),
3 Circuit breaker,
4 Bus bar,
5 Current transformer (CT),
6 Voltage transformer (VT),
7 Power cable connecting bushing,
8 Cable head,
9 Power cable,
10 Cable chamber,
11 Voltage transformer connecting bushing,
12 Control chamber,
13 Operation mechanism of the disconnecting switch,
14 Operation mechanism of the circuit breaker,
15 Bus bar connecting bushing,
16 Frame,
17 Connection conductor (for connection between bus bar connecting bushing 15 and voltage transformer connecting bushing 11),
100 Housing,
A, B, C, D, E ,F ,G, H, J, K Corner points.

## Claims

1. A gas insulated switching device, wherein
a bus bar (4), a disconnecting switch (2), a circuit breaker (3), and a current transformer (5) are disposed inside a housing (100),
a pressure vessel (1) in which an insulating gas is sealed is incorporated in the housing (100),
the disconnecting switch (2) and the circuit breaker (3) are built in the pressure vessel (1),
the bus bar (4) and a power cable (9) are connected via the disconnecting switch (2), the circuit breaker (3), and a primary conductor of the current transformer (5),
the pressure vessel (1) is disposed between an operation mechanism (14) of the circuit breaker (3) and the power cable (9),
**characterizing in that**:
a step part (1s) is provided at a corner on the power cable side of the pressure vessel (1),
an outside step cavity (1hua) is formed outside the step part (1s) and inside the housing (100),
the current transformer (5) is disposed in the outside step cavity (1hua) and on the back of the pressure vessel (1),
the primary conductor of the current transformer (5) and the power cable (9) are connected via a bushing (7) for connecting the power cable (9) that penetrates the wall part of the housing (100) interposed between the outside step cavity (1hua) and the power cable (9).

2. The gas insulated switching device according to claim 1, wherein
the operation mechanism (14) of the circuit breaker (3) is disposed on the front side of the housing (100) from the pressure vessel (1),
the power cable (9) is disposed on the back side of the housing (100) from the pressure vessel (1),
a cable head (8) of the power cable (9) and the bushing (7) for connecting the power cable (9) are structured to be attached and detached in the front-rear direction of the housing (100).

3. The gas insulated switching device according to claim 1, wherein
the operation mechanism (14) of the circuit breaker (3) is disposed on the front side of the housing (100) from the pressure vessel (1),
the power cable (9) is disposed on the back side of the housing (100) from the pressure vessel (1),
a cable head (8) of the power cable (9) and the bushing (7) for connecting the power cable (9) are structured to be attached and detached in the vertical direction of the housing (100).

4. The gas insulated switching device according to any one of claims 1 to 3, wherein
the arrangement of the current transformer (5) of each phase of three phases viewed from the back side of the housing (100) is a staggered arrangement.

5. The gas insulated switching device according to any one of claims 1 to 3, wherein
the arrangement of the current transformer (5) of each phase of three phases viewed from the back side of the housing (100) is in a row in the horizontal direction.

6. The gas insulated switching device according to any one of claims 1 to 5, wherein
the power cable (9) extends in the vertical direction of the housing (100) in a cable chamber (10) provided on the back side of the housing (100) and extending in the vertical direction of the housing (100).

7. The gas insulated switching device according to any one of claims 1 to 6, wherein the power cable (9) extends downward from the current transformer (5).

8. The gas insulated switching device according to any one of claims 1 to 6, wherein the power cable (9) extends upward from the current transformer (5).

9. The gas insulated switching device according to any one of claims 1 to 8, wherein
the bus bar (4) is located in the upper side of the pressure vessel (1) and disposed in the housing (100).

10. The gas insulated switching device according to any one of claims 1 to 9, wherein
a voltage transformer (6) is located in the upper side of the pressure vessel (1) and disposed in the housing (100).

11. The gas insulated switching device according to claim 9, wherein
a voltage transformer (6) is located in the upper side of the pressure vessel (1) and located in front of the bus bar (4) and disposed in the housing (100).

12. The gas insulated switching device according to any one of claims 1 to 9, wherein
a voltage transformer (6) is located in the lower side of the pressure vessel (1) and disposed in the housing (100).

## Patentansprüche

1. Gasisolierte Schaltvorrichtung, wobei
eine Sammelschiene (4), ein Trennschalter (2), ein Leistungsschalter (3) und ein Stromtransformator (5) innerhalb eines Gehäuses (100) angeordnet sind,
ein Druckbehälter (1), in welchem ein isolierendes Gas eingeschlossen ist, in dem Gehäuse (100) aufgenommen ist,
der Trennschalter (2) und der Leistungsschalter (3) in den Druckbehälter (1) eingebaut sind,
die Sammelschiene (4) und ein Stromkabel (9) über den Trennschalter (2), den Leistungsschalter (3) und einen Primärleiter des Stromtransformators (5) verbunden sind,
der Druckbehälter (1) zwischen einem Betätigungsmechanismus (14) des Leistungsschalters (3) und dem Stromkabel (9) angeordnet ist,
**dadurch gekennzeichnet, dass**:
ein Stufenteil (1s) in einer Ecke auf der Stromkabelseite des Druckbehälters (1) vorgesehen ist,
eine Außenstufenkavität (1hua) außerhalb des Stufenteils (1s) und innerhalb des Gehäuses (100) ausgebildet ist,
der Stromtransformator (5) in der Außenstufenkavität (1hua) und an der Rückseite des Druckbehälters (1) angeordnet ist,
der Primärleiter des Stromtransformators (5) und das Stromkabel (9) über eine Durchführungshülse (7) zum Verbinden des Stromkabels (9) verbunden sind, die den Wandteil des Gehäuses (100) durchdringt, der zwischen der Außenstufenkavität (1hua) und dem Stromkabel (9) angeordnet ist.

2. Gasisolierte Schaltvorrichtung nach Anspruch 1, wobei
der Betätigungsmechanismus (14) des Leistungsschalters (3) an der Vorderseite des Gehäuses (100) des Druckbehälters (1) angeordnet ist,
das Stromkabel (9) an der Rückseite des Gehäuses (100) des Druckbehälters (1) angeordnet ist,
ein Kabelkopf (8) des Stromkabels (9) und die Durchführungshülse (7) zum Verbinden des Stromkabels (9) so aufgebaut sind, dass sie in der Vorderseite-Rückseite-Richtung des Gehäuses (100) angebracht und gelöst werden.

3. Gasisolierte Schaltvorrichtung nach Anspruch 1, wobei
der Betätigungsmechanismus (14) des Leistungsschalters (3) an der Vorderseite des Gehäuses (100) des Druckbehälters (1) angeordnet ist,
das Stromkabel (9) an der Rückseite des Gehäuses (100) des Druckbehälters (1) angeordnet ist,
ein Kabelkopf (8) des Stromkabels (9) und die Durchführungshülse (7) zum Verbinden des Energiekabels (9) aufgebaut sind, in der vertikalen Richtung des Gehäuses (100) angebracht und gelöst zu werden.

4. Gasisolierte Schaltvorrichtung nach einem der Ansprüche 1 bis 3, wobei
die Anordnung des Stromtransformators (5) von jeder Phase der drei Phasen, von der Rückseite des Gehäuses (100) aus betrachtet, eine versetzte Anordnung ist.

5. Gasisolierte Schaltvorrichtung nach einem der Ansprüche 1 bis 3, wobei
sich die Anordnung des Stromtransformators (5) von jeder Phase der drei Phasen, von der Rückseite des Gehäuses (100) aus betrachtet, in einer Reihe in der horizontalen Richtung befindet.

6. Gasisolierte Schaltvorrichtung nach einem der Ansprüche 1 bis 5, wobei
sich das Stromkabel (9) in der vertikalen Richtung des Gehäuses (100) in einer Kabelkammer (10) erstreckt, die an der Rückseite des Gehäuses (100) vorgesehen ist und die sich in der vertikalen Richtung des Gehäuses (100) erstreckt.

7. Gasisolierte Schaltvorrichtung nach einem der Ansprüche 1 bis 6, wobei sich das Stromkabel (9) von dem Stromtransformator (5) aus nach unten erstreckt.

8. Gasisolierte Schaltvorrichtung nach einem der Ansprüche 1 bis 6, wobei sich das Stromkabel (9) von dem Stromtransformator (5) aus nach oben erstreckt.

9. Gasisolierte Schaltvorrichtung nach einem der Ansprüche 1 bis 8, wobei
sich die Sammelschiene (4) auf der oberen Seite des Druckbehälters (1) befindet und im Gehäuse (100) angeordnet ist.

10. Gasisolierte Schaltvorrichtung nach einem der Ansprüche 1 bis 9, wobei
sich ein Spannungstransformator (6) an der oberen Seite des Druckbehälters (1) befindet und in dem Gehäuse (100) angeordnet ist.

11. Gasisolierte Schaltvorrichtung nach Anspruch 9, wobei
sich ein Spannungstransformator (6) an der oberen Seite des Druckbehälters (1) befindet und sich vor der Sammelschiene (4) befindet und im Gehäuse (100) angeordnet ist.

12. Gasisolierte Schaltvorrichtung nach einem der Ansprüche 1 bis 9, wobei
sich ein Spannungstransformator (6) an der unteren Seite des Druckbehälters (1) befindet und im Gehäuse (100) angeordnet ist.

## Revendications

1. Dispositif de commutation isolé au gaz, dans lequel
une barre omnibus (4), un sectionneur (2), un disjoncteur (3) et un transformateur de courant (5) sont disposés à l'intérieur d'un boîtier (100),
une cuve sous pression (1) dans laquelle est scellé un gaz isolant est incorporée dans le boîtier (100),
le sectionneur (2) et le disjoncteur (3) sont construits dans la cuve sous pression (1),
la barre omnibus (4) et un câble d'alimentation (9) sont branchés par le biais du sectionneur (2), du disjoncteur (3), et d'un conducteur primaire du transformateur de courant (5),
la cuve sous pression (1) est disposée entre un mécanisme de fonctionnement (14) du disjoncteur (3) et le câble d'alimentation (9),
**caractérisé en ce que** :
une partie marche (1s) est disposée à un coin sur le côté câble d'alimentation de la cuve sous pression (1),
une cavité extérieure de marche (1hua) est formée à l'extérieur de la partie marche (1s) et à l'intérieur du boîtier (100),
le transformateur de courant (5) est disposé dans la cavité extérieure de marche (1hua) et sur l'arrière de la cuve sous pression (1),
le conducteur primaire du transformateur de courant (5) et le câble d'alimentation (9) sont branchés par le biais d'une traversée (7) servant à brancher le câble d'alimentation (9) qui pénètre dans la partie paroi du boîtier (100) intercalée entre la cavité extérieure de marche (1hua) et le câble d'alimentation (9).

2. Dispositif de commutation isolé au gaz selon la revendication 1, dans lequel
le mécanisme fonctionnement (14) du disjoncteur (3) est disposé sur le côté avant du boîtier (100) par rapport à la cuve sous pression (1),
le câble d'alimentation (9) est disposé sur le côté arrière du boîtier (100) par rapport à la cuve sous pression (1),
une tête de câble (8) du câble d'alimentation (9) et la traversée (7) servant à brancher le câble d'alimentation (9) sont structurées pour être attachées et détachées dans la direction avant-arrière du boîtier (100).

3. Dispositif de commutation isolé au gaz selon la revendication 1, dans lequel
le mécanisme fonctionnement (14) du disjoncteur (3) est disposé sur le côté avant du boîtier (100) par rapport à la cuve sous pression (1),
le câble d'alimentation (9) est disposé sur le côté arrière du boîtier (100) par rapport à la cuve sous pression (1),
une tête de câble (8) du câble d'alimentation (9) et la traversée (7) servant à brancher le câble d'alimentation (9) sont structurées pour être attachées et détachées dans la direction verticale du boîtier (100).

4. Dispositif de commutation isolé au gaz selon l'une quelconque des revendications 1 à 3, dans lequel
l'agencement du transformateur de courant (5) de chaque phase parmi trois phases, vu depuis le côté arrière du boîtier (100), est un agencement en quinconce.

5. Dispositif de commutation isolé au gaz selon l'une quelconque des revendications 1 à 3, dans lequel
l'agencement du transformateur de courant (5) de chaque phase parmi trois phases, vu depuis le côté arrière du boîtier (100), est dans une rangée dans la direction horizontale.

6. Dispositif de commutation isolé au gaz selon l'une quelconque des revendications 1 à 5, dans lequel
le câble d'alimentation (9) s'étend dans la direction verticale du boîtier (100) dans une chambre de câble (10) disposée sur le côté arrière du boîtier (100) et s'étendant dans la direction verticale du boîtier (100).

7. Dispositif de commutation isolé au gaz selon l'une quelconque des revendications 1 à 6, dans lequel
le câble d'alimentation (9) s'étend vers le bas depuis le transformateur de courant (5).

8. Dispositif de commutation isolé au gaz selon l'une quelconque des revendications 1 à 6, dans lequel
le câble d'alimentation (9) s'étend vers le haut depuis le transformateur de courant (5).

9. Dispositif de commutation isolé au gaz selon l'une quelconque des revendications 1 à 8, dans lequel
la barre omnibus (4) est située dans le côté supérieur de la cuve sous pression (1) et disposée dans le boîtier (100).

10. Dispositif de commutation isolé au gaz selon l'une quelconque des revendications 1 à 9, dans lequel
un transformateur de tension (6) est situé dans le côté supérieur de la cuve sous pression (1) et disposé dans le boîtier (100).

11. Dispositif de commutation isolé au gaz selon la revendication 9, dans lequel
un transformateur de tension (6) est situé dans le côté supérieur de la cuve sous pression (1) et situé à l'avant de la barre omnibus (4) et disposé dans le boîtier (100).

12. Dispositif de commutation isolé au gaz selon l'une quelconque des revendications 1 à 9, dans lequel
un transformateur de tension (6) est situé dans le côté inférieur de la cuve sous pression (1) et disposé dans le boîtier (100).
